# EUROPEAN PATENT SPECIFICATION

(11) **EP 3 358 342 B1**
(45) Date of publication and mention of the grant of the patent: **09.08.2023**
(21) Application number: 15905329.7
(22) Date of filing: 29.09.2015
(51) Int. Cl.: G01N 23/223, E05B 53/00, E05B 47/00

(54) **XRF ANALYSIS DEVICE**
XRF ANALYSEVORRICHTUNG
DISPOSITIF D'ANALYSE XRF

(43) Date of publication of application: 08.08.2018
(73) Proprietor: Shimadzu Corporation, Kyoto-shi, Kyoto 604-8511 (JP)
(72) Inventor: KOBAYASHI, Kanji, Kyoto-shi Kyoto 604-8511 (JP)
(74) Representative: Mewburn Ellis LLP
(86) International application number: PCT/JP2015/077417
(87) International publication number: WO 2017/056174

(56) References cited:
- JP-A- 2000 162 161
- JP-A- 2008 032 688
- JP-A- 2010 175 506
- JP-A- 2013 014 977
- JP-A- 2013 137 273
- JP-U- 3 187 413
- US-A- 3 018 127
- US-A- 3 465 803
- US-A- 5 059 075

## Description

### Technical Field

The present invention relates to a fluorescent X-ray analysis device for acquiring information on an element included in a sample.

### Background Art

Fluorescent X-ray analysis devices are used for qualitative or quantitative analysis of an element that is included in a solid sample, a powder sample or a liquid sample by detecting fluorescent X-rays that are emitted from the sample, which is irradiated with primary X-rays for excitation (see Patent Document 1).

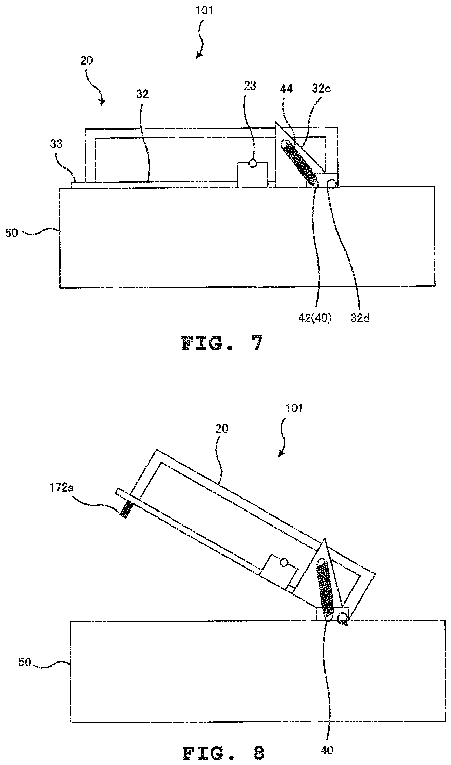

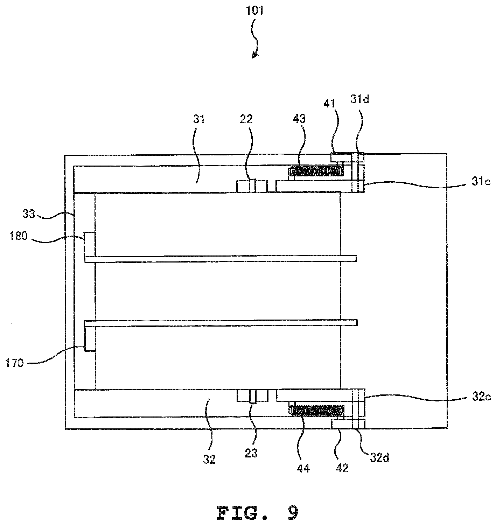

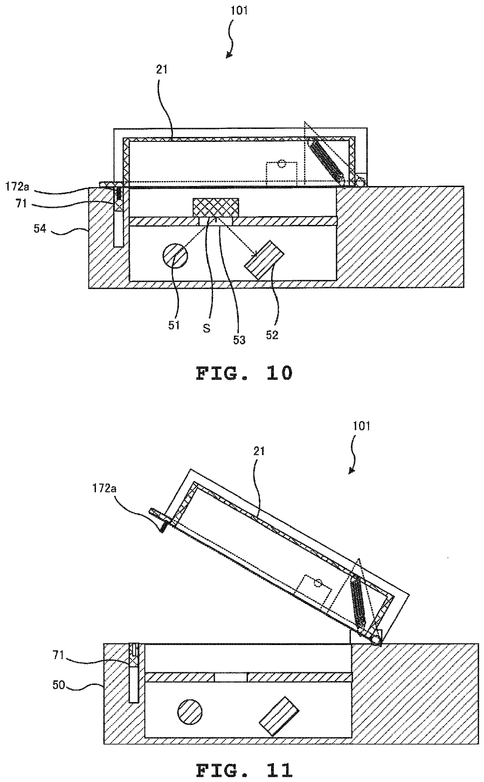

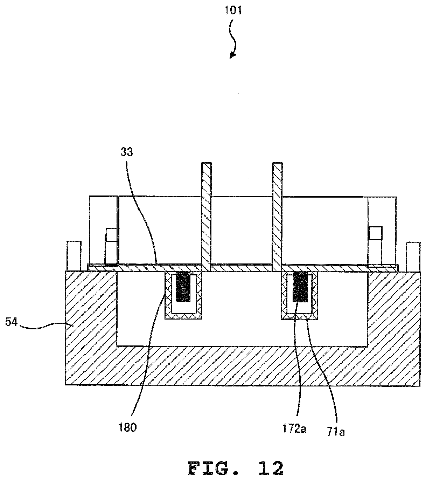

FIGS. 7 and 8 are side diagrams schematically showing the configuration of a conventional fluorescent X-ray analysis device. FIG. 9 is a plan diagram showing a fluorescent X-ray analysis device. FIGS. 10 and 11 are cross-sectional diagrams showing a fluorescent X-ray analysis device as viewed from the side. FIG. 12 is a cross-sectional diagram showing a fluorescent X-ray analysis device as viewed from the front. A fluorescent X-ray analysis device 101 is provided with a device main body 50, a housing on the upper side of a sample chamber (door part) 20, an opening/closing mechanism 40 for moving the housing on the upper side of the sample chamber 20, and a computer (not shown) for controlling the entirety of the fluorescent X-ray analysis device 101.

The device main body 50 has a housing 54 in rectangular parallelepiped form, and an X-ray tube 51 and a detector 52 are installed inside the housing 54. In addition, an opening 53 in circular form is created in the housing 54 so that the surface of a sample S to be analyzed covers the opening 53 when the sample S is arranged at a predetermined place.

The X-ray tube 51 has a target, which is an anode, and a filament, which is a cathode, so that primary X-rays generated on the end surface of the target can be emitted. The X-ray tube 51 is installed so that the emitted primary X-rays enter through the opening 53. Accordingly, the surface of the sample S to be analyzed is irradiated with primary X-rays when the surface of the sample S to be analyzed covers the opening 53.

The detector 52 has an X-ray detecting element for detecting the intensity of the fluorescent X-rays. The detector 52 is installed so that the fluorescent X-rays generated on the surface of the sample S to be analyzed enter into the detector 52. When the surface of the sample S to be analyzed is irradiated with primary X-rays, fluorescent X-rays are generated on the surface of the sample S to be analyzed, and the X-ray detecting element detects the intensity of the fluorescent X-rays.

The opening/closing mechanism 40 is provided with a right side support 41 formed in the right rear portion of the device main body 50 on the upper surface and a left side support 42 formed in the left rear portion of the device main body 50 on the upper surface.

The housing on the upper side of the sample chamber 20 is provided with a housing 21 in cylindrical form having an upper surface, a right sidewall, a front sidewall, a left sidewall and a rear sidewall. In addition, an O ring for airtight sealing is attached to the lower surface of the housing 21 so that the housing 21 is placed on the upper surface of the device main body 50 through the O ring so as to form an airtight space between the housing 21 and the device main body 50, in which a sample S is to be arranged. Here, the housing on the upper side of the sample chamber 20 needs to have such an intensity as to bear being vacuumed and needs to be made of a material that shields primary X-rays, and therefore is heavy (10 kg, for example).

A right side pin 22 in cylindrical form is formed so as to protrude to the right from the center portion of the right sidewall of the housing 21 of the housing on the upper side of the sample chamber 20, and thus is attached to the right side connection part 31 that extends in the direction to the front and rear. In addition, a left side pin 23 in cylindrical form is formed so as to protrude to the left from the center portion of the left sidewall of the housing 21 of the housing on the upper side of the sample chamber 20, and thus is attached to the left side connection part 32 that extends in the front to rear direction. Furthermore, a front side connection part 33 that extends in the left to right direction is formed so as to connect one end of the right side connection part 31 to one end of the left side connection part 32.

A rotational member 31c is formed on the other end of the right side connection part 31 on the upper surface, and the rotational member 31c is attached to the right side support 41 through a rotational axis 31d so as to be rotatable. In addition, an expandable and contractible spring 43 is attached to the rotational member 31c and the right side support 41 so that a rotational force is applied to hold the right side connection part 31 at a set angle.

A rotational member 32c is formed on the other end of the left side connection part 32 on the upper surface, and the rotational member 32c is attached to the left side support 42 through a rotational axis 32d so as to be rotatable. In addition, an expandable and contractible spring 44 is attached to the rotational member 32c and the left side support 42 so that a rotational force is applied to hold the left side connection part 32 at a set angle.

A user of the fluorescent X-ray analysis device 101 can grasp the front side connection part 33 in order to rotate the housing on the upper side of the sample chamber 20 with the right side connection part 31 and the left side connection part 32 rotating in the forward direction (clockwise) as viewed in the left side diagram of FIGS. 8 and 10. At this time, the extending force of the left and right springs 43 and 44 is applied, and therefore, it is not necessary for the user to apply force in order to open or close the housing on the upper side of the sample chamber 20. In addition, the springs 43 and 44 extend or contract in such a direction that the right side connection part 31 and the left side connection part 32 are held at a set angle. As a result, the housing on the upper side of the sample chamber 20 can be held in an open position so that the user can place a sample S at a predetermined place or remove the sample S from the predetermined place.

After that, the user can grasp the front side connection part 33 in order to rotate the housing on the upper side of the sample chamber 20 with the right side connection part 31 and the left side connection part 32 rotating in the backward direction (counter-clockwise) as viewed in the left side diagram of FIGS. 7 and 9, and then, the housing on the upper side of the sample chamber 20 comes to a closed position.

In the fluorescent X-ray analysis device 101, the X-ray tube 51 emits primary X-rays, and therefore, a left side lock switch 170 and a right side lock switch 180 are provided in order to prevent the user from opening the housing on the upper side of the sample chamber 20 by mistake during the measurement process (see FIG. 12) .

The left side lock switch 170 is provided with a left side actuator insertion part 71 and a left side actuator 172. The left side actuator 172 has a rod 172a made of a metal and is provided on the left of the front sidewall of the housing on the upper side of the sample chamber 20. In addition, the rod 172a protrudes towards the bottom by a predetermined distance from the lower surface of the front sidewall. The left side actuator insertion part 71 has a housing 71a in rectangular parallelepiped form and is provided in the upper left portion of the front sidewall of the device main body 50. An insertion hole is created through the upper surface of the housing 71a, and a switch (not shown) is provided inside the housing 71a.

As a result, the rod 172a is inserted through the insertion hole when the housing on the upper side of the sample chamber 20 comes to the closed position so that the switch is electrically connected so as to output a signal to the computer. Consequently, the computer makes it impossible for the housing on the upper side of the sample chamber 20 to move to the open position. Meanwhile, the rod 172a is pulled out of the insertion hole when the housing on the upper side of the sample chamber 20 comes to the open position so that the switch is electrically disconnected so as to not output a signal to the computer.

Here, the left side lock switch 180 has the same structure as the right side lock switch 170.

JP2000162161A discloses a fluorescent X-ray analyzing device in which a cover case formed of a side circumferential wall member and an attachable and detachable lid member are provided above a base plate on the upper surface of a chamber in such a manner as to be vertically movable. In the analysis of a small sample, the sample is placed on the base plate, the cover case having the lid member mounted thereon is lowered, and the analysis is performed while airtightly keeping the inner parts of the cover case and the chamber. In the analysis of a large sample, the cover case from which the lid member is removed is lowered, and the analysis is performed in the state where the sample upper part is protruded from the upper end surface of the cover case. Even if the fluorescent X-ray emitted from the lower surface of the sample advances horizontally between the sample lower surface and the base plate, it is shielded by the side circumferential wall member and not leaked to the outside, and the safety can be thus ensured.

### Citation List

### Patent Literature

Patent Literature 1: Utility Model Registration No. 3187413

### Summary of Invention

### 1. Technical Problem

As described above, a user of the fluorescent X-ray analysis device 101 arranges a sample S at a predetermined place or removes the sample S from the predetermined place after holding the housing on the upper side of the sample chamber 20 in the open position. At this time, the user's hand or the sample S may hit the rod 172a, which may damage the rod 172a.

Therefore, an object of the present invention is to provide an analysis device where the actuators can be accommodated in order to prevent them from being an obstacle to the user or to prevent them from being damaged when the housing on the upper side of the sample chamber is opened.

### 2. Solution to Problem

According to the present invention, there is provided a fluorescent X-ray analysis device as specified in claim 1.

### 3. Advantageous Effects of Invention

As described above, in the analysis device according to the present invention, the actuators are accommodated (not protruding), which do not hamper the user's work and prevent the actuators from being damaged when the door part is opened, and thus, operability and safety are increased. In addition, the appearance is better, which gives an impression of safety.

### (Other Means for Solving Problem and Effects Thereof)

The analysis device according to the present invention may further include a wire rope in such a manner that an end of the actuator is attached to one end of the wire rope, and a link mechanism that slides as the door part moves is attached to the other end of the wire rope.

In addition, a compressed spring that applies a force so that the actuator moves to the protruding position may be attached to the actuator in the analysis device according to the present invention.

Furthermore, the door part may have an upper surface, a right sidewall, a front sidewall, a left sidewall, a rear sidewall, a right side connection part that is attached to the right sidewall and a left side connection part that is attached to the left sidewall so as to be rotatable between an open position and a closed position with one end of the right side connection part and one end of the left side connection part as a rotational axis in the analysis device according to the present invention.

Moreover, an X-ray tube and a detector may be installed inside the device main body in the analysis device according to the present invention.

### Brief Description of Drawings

FIG. 1 is a side diagram schematically showing an example of the structure of the fluorescent X-ray analysis device according to an embodiment of the present invention;
FIG. 2 is a side diagram schematically showing an example of the structure of the fluorescent X-ray analysis device according to the embodiment of the present example;
FIG. 3 is a plan diagram showing a fluorescent X-ray analysis device;
FIG. 4 is a cross-sectional diagram showing the fluorescent X-ray analysis device;
FIG. 5 is a cross-sectional diagram showing the fluorescent X-ray analysis device;
FIG. 6 is a cross-sectional diagram showing the fluorescent X-ray analysis device;
FIG. 7 is a side diagram schematically showing the structure of a conventional fluorescent X-ray analysis device;
FIG. 8 is a side diagram schematically showing the structure of the conventional fluorescent X-ray analysis device;
FIG. 9 is a plan diagram showing a fluorescent X-ray analysis device;
FIG. 10 is a cross-sectional diagram showing the fluorescent X-ray analysis device;
FIG. 11 is a cross-sectional diagram showing the fluorescent X-ray analysis device; and
FIG. 12 is a cross-sectional diagram showing the fluorescent X-ray analysis device.

### Description of Embodiments

In the following, an embodiment of the present invention is described in reference to the drawings. Here, the present invention is not limited to the below-described embodiment, but only to the scope of the appended claims.

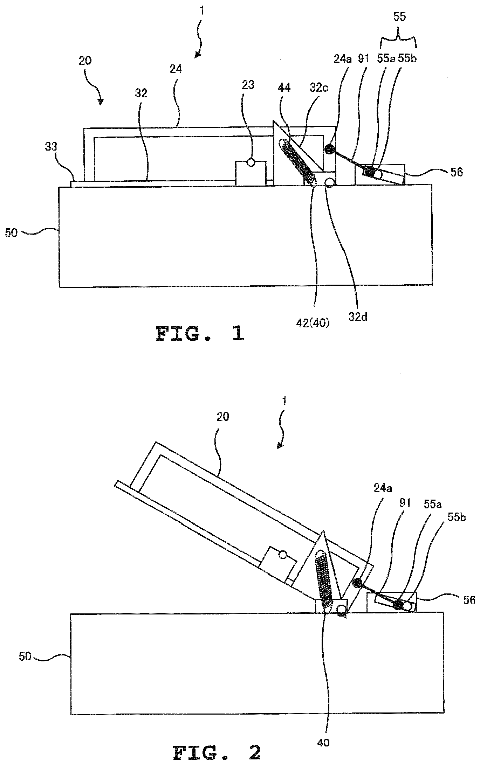

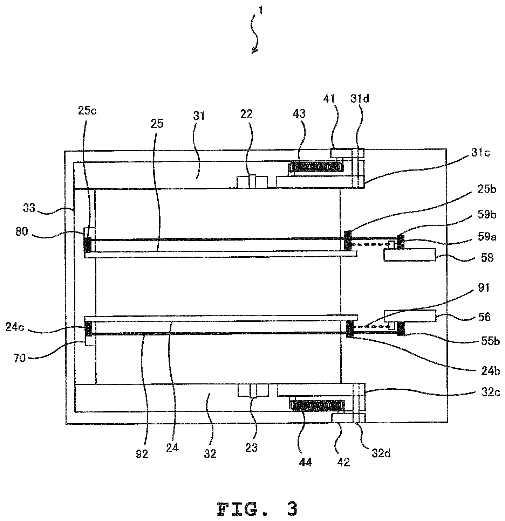

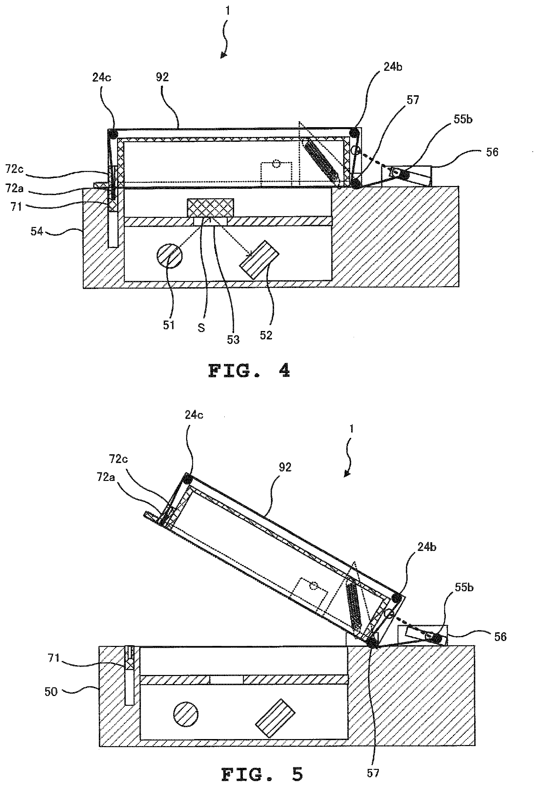

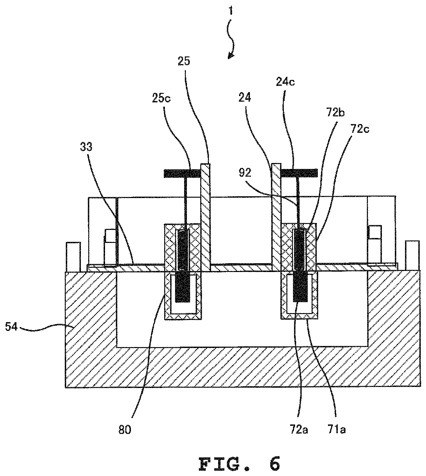

FIGS. 1 and 2 are side diagrams schematically showing an example of the structure of the fluorescent X-ray analysis device according to an embodiment of the present invention. FIG. 3 is a plan diagram showing the fluorescent X-ray analysis device. FIGS. 4 and 5 are cross-sectional diagrams showing the fluorescent X-ray analysis device from the side. FIG. 6 is a cross-sectional diagram showing the fluorescent X-ray analysis device from the front. Here, the same symbols are attached to the same components as in the fluorescent X-ray analysis device 101.

The fluorescent X-ray analysis device 1 is provided with a device main body 50, a housing on the upper side of a sample chamber (door part) 20, an opening/closing mechanism 40 for moving the housing on the upper side of the sample chamber 20, two lock switches 70 and 80, and a computer (not shown) for controlling the entirety of the fluorescent X-ray analysis device 1.

The device main body 50 has a housing 54 in rectangular parallelepiped form, and an X-ray tube 51 and a detector 52 are installed inside the housing 54. In addition, a circular opening 53 is created in a wall of the housing 54, and a sample S can be mounted in a predetermined place so that the surface of the sample S to be analyzed covers the opening 53.

In the rear left portion on the upper surface of the housing 54, a left side slide rail 56 and a left side pulley 57 with a first cover are formed in order to move a plate 55 in the front to rear directions. In the plate 55, left side pins 55a and 55b in columnar form are formed so as to protrude to the left. In the rear right portion on the upper surface of the housing 54, a right side slide rail 58 and a right side pulley with the first cover are formed in order to move a plate 59 in the front to rear directions. In the plate 59, right side pins 59a and 59b in columnar form are formed so as to protrude to the right.

The housing on the upper side of the sample chamber 20 is provided with a cylindrical housing portion 21 having an upper surface, a right sidewall, a front sidewall, a left sidewall and a rear sidewall. In addition, an O-ring for airtight sealing is attached to the lower surface of the housing portion 21, and the housing portion 21 and the device main body 50 form an airtight space within which a sample S is to be arranged when the housing portion 21 is mounted on the upper surface of the device main body 50 with the O-ring in-between.

In the left portion of the outer surface of the housing portion 21 in the housing on the upper side of the sample chamber 20, a left side plate 24 is formed so as to protrude. At one end of the left side plate 24, a left side pin 24a in columnar form that protrudes to the left and a left side pulley 24b with a second cover are formed. At the other end of the left side plate 24, a left side pulley 24c with a third cover is formed.

In the right portion of the outer surface of the housing portion 21 in the housing on the upper side of the sample chamber 20, a right side plate 25 is formed so as to protrude. At one end of the right side plate 25, a right side pin in columnar form that protrudes to the right and a right side pulley 25b with a second cover are formed. At the other end of the right side plate 25, a right side pulley 25c with a third cover is formed.

A first opening is created at a first end of a left side linking member 91, and a second opening is created at a second end that is away from the first end by a predetermined distance. The left side pin 24a is inserted into the first opening, and the left side pin 55a is inserted into the second opening. As a result, the plate 55 automatically moves to the rear within the left side slide rail 56 when the housing on the upper side of the sample chamber 20 is opened. Meanwhile, the plate 55 automatically moves to the front within the left side slide rail 56 when the housing on the upper side of the sample chamber 20 is closed.

A left side lock switch 70 is provided with a left side actuator insertion part 71 and a left side actuator 72. The left side actuator 72 has a rod 72a made of a metal, a cylindrical slide bearing 72c for moving the rod 72a in the upward and downward directions, and a compressed spring 72b arranged within the slide bearing 72c, and is provided in the left portion of the front sidewall of the housing on the upper side of the sample chamber 20. In addition, the rod 72a is movable between the protruding position where the rod 72a protrudes downward from the lower surface of the front sidewall by a predetermined distance (lower position within the slide bearing 72c) and the accommodated position where the rod 72a is accommodated within the housing on the upper side of the sample chamber 20 (upper position within the slide bearing 72c). The compressed spring 72b applies a force so that the rod 72a moves to the protruding position.

A first end of a left side wire rope 92 is attached to an end of the rod 72a and passes through the space between the pulley and the cover (wire guard for preventing the wire from being disengaged) of the left side pulley 24c with the third cover, the space between the pulley and the cover (wire guard for preventing the wire from being disengaged) of the left side pulley 24b with the second cover, and the space between the pulley and the cover (wire guard for preventing the wire from being disengaged) of the left side pulley 57 with the first cover. A second end of the left side wire rope 92 that is away from the first end by a predetermined distance is attached to the left side pin 55b on the plate 55. As a result, the rod 72a automatically moves upward within the slide bearing 72c when the plate 55 moves to the rear within the left side slide rail 56. Meanwhile, the rod 72a automatically moves downward within the slide bearing 72c when the plate 55 moves to the front within the left side slide rail 56.

Here, the right side lock switch 80 has the same configuration as the left side lock switch 70.

In the fluorescent X-ray analysis device 1 having such a configuration, the user grasps the front side connection part 33 and rotates the right side connection part 31 and the left side connection part 32 in the forward direction (clockwise) as viewed in the left side diagrams in FIGS. 2 and 4 in order to rotate the housing on the upper side of the sample chamber 20. At this time, the plate 55 automatically moves to the rear within the left side slide rail 56, and the rod 72a automatically moves upward within the slide bearing 72c. That is to say, the rod 72a is automatically placed in the accommodated position. As a result, the user can place a sample S in a predetermined place or can remove the sample S from the predetermined place without the rod 72a being an obstacle or without damaging the rod 72a.

After that, the user grasps the front side connection part 33 and rotates the right side connection part 31 and the left side connection part 32 in the backward direction (counterclockwise) as viewed in the left side diagram in FIGS. 1 and 3 in order to rotate the housing on the upper side of the sample chamber 20 to the closed position. At this time, the plate 55 automatically moves to the front within the left side slide rail 56, and the rod 72a automatically moves downward within the slide bearing 72c. That is to say, the rod 72a is automatically placed in the protruding position, and thus, the rod 72a is inserted into the insertion hole. As a result, a switch is turned on for electrical connection so as to output a signal to the computer, and the computer makes it impossible for the housing on the upper side of the sample chamber 20 to move to the open position.

### Industrial Applicability

The present invention can be applied to fluorescent X-ray analysis devices for acquiring information on an element that is included in a sample.

### Reference Signs List

- 1: fluorescent X-ray analysis device
- 20: housing on the upper side of a sample chamber (door part)
- 50: device main body
- 70: lock switch
- 71: actuator insertion part
- 72: actuator

## Claims

1. A fluorescent X-ray analysis device (1), comprising:
a device main body (50) in which a sample (S) is to be arranged;
a door part (20) that is movable between an open position for opening the device main body (50) and a closed position for closing the device main body (50); and
a lock switch (70) having an actuator insertion part (71) that is provided in the device main body (50) and an actuator (72) that is provided in the door part (20), wherein
it becomes impossible for the door part (20) to move to the open position while the actuator (72) is inserted into the actuator insertion part (71), **characterized in that**
the actuator (72) is configured to move between a protruding position where the actuator (72) protrudes from the door part (20) and an accommodated position where the actuator (72) is accommodated in the door part (20), and
the actuator (72) is configured to automatically move to the protruding position when the door part (20) is moved to the closed position, whereas the actuator (72) is configured to automatically move to the accommodated position when the door part (20) is moved to the open position.

2. The fluorescent X-ray analysis device (1) according to claim 1, **characterized in that**
the fluorescent X-ray analysis device (1) further comprises a wire rope (92),
an end of the actuator (72) is attached to one end of the wire rope (92), and
a link mechanism (55, 55b) that slides as the door part (20) moves is attached to the other end of the wire rope (92).

3. The fluorescent X-ray analysis device (1) according to claim 1 or 2, **characterized in that** a compressed spring (72b) that applies a force so that the actuator (72) moves to the protruding position is attached to the actuator (72).

4. The fluorescent X-ray analysis device (1) according to any of claims 1 through 3, **characterized in that**
the door part (20) comprises an upper surface, a right sidewall, a front sidewall, a left sidewall and a rear sidewall,
the door part (20) has a right side connection part (31) that is attached to the right sidewall and a left side connection part (32) that is attached to the left sidewall, and
the door part (20) is rotatable between an open position and a closed position with one end of the right side connection part (31) and one end of the left side connection part (32) as a rotational axis.

5. The fluorescent X-ray analysis device (1) according to any of claims 1 through 4, **characterized in that** an X-ray tube (51) and a detector (52) are installed inside the device main body (50).

## Patentansprüche

1. Fluoreszenz-Röntgenstrahlen-Analysevorrichtung (1), die Folgendes umfasst:
einen Vorrichtungshauptkörper (50), in dem eine Probe (S) anzuordnen ist;
einen Türteil (20), der zwischen einer offenen Position zum Öffnen des Vorrichtungshauptkörpers (50) und einer geschlossenen Position zum Schließen des Vorrichtungshauptkörpers (50) bewegbar ist; und
einen Verriegelungsschalter (70), der einen Aktuatoreinführungsteil (71) aufweist, der in dem Vorrichtungshauptkörper (50) bereitgestellt ist, und einen Aktuator (72) aufweist, der in dem Türteil (20) bereitgestellt ist, wobei
es unmöglich wird, dass sich der Türteil (20) in die offene Position bewegt, während der Aktuator (72) in den Aktuatoreinführungsteil (71) eingeführt ist, **dadurch gekennzeichnet, dass**
der Aktuator (72) ausgelegt ist, sich zwischen einer vorstehenden Position, in der der Aktuator (72) von dem Türteil (20) vorsteht, und einer aufgenommenen Position, in der der Aktuator (72) in dem Türteil (20) aufgenommen ist, zu bewegen und
der Aktuator (72) ausgelegt ist, sich automatisch in die vorstehende Position zu bewegen, wenn der Türteil (20) in die geschlossene Position bewegt wird, während der Aktuator (72) ausgelegt ist, um sich automatisch in die aufgenommene Position zu bewegen, wenn der Türteil (20) in die offene Position bewegt wird.

2. Fluoreszenz-Röntgenstrahlen-Analysevorrichtung (1) nach Anspruch 1, **dadurch gekennzeichnet, dass**
die Fluoreszenz-Röntgenstrahlen-Analysevorrichtung (1) ferner ein Drahtseil (92) umfasst,
wobei ein Ende des Aktuators (72) an einem Ende des Drahtseils (92) angebracht ist und
ein Verbindungsmechanismus (55, 55b), der gleitet, wenn sich der Türteil (20) bewegt, an dem anderen Ende des Drahtseils (92) angebracht ist.

3. Fluoreszenz-Röntgenstrahlen-Analysevorrichtung (1) nach Anspruch 1 oder 2, **dadurch gekennzeichnet, dass** eine zusammengedrückte Feder (72b), die eine Kraft ausübt, sodass der Aktuator (72) sich in die vorstehende Position bewegt, an dem Aktuator (72) angebracht ist.

4. Fluoreszenz-Röntgenstrahlen-Analysevorrichtung (1) nach einem der Ansprüche 1 bis 3, **dadurch gekennzeichnet, dass**:
der Türteil (20) eine obere Fläche, eine rechte Seitenwand, eine vordere Seitenwand, eine linke Seitenwand und eine hintere Seitenwand aufweist,
der Türteil (20) einen Verbindungsteil (31) auf der rechten Seite, der an der rechten Seitenwand angebracht ist, und einen Verbindungsteil (32) auf der linken Seite aufweist, der an der linken Seitenwand angebracht ist, und
der Türteil (20) zwischen einer offenen Position und einer geschlossenen Position mit einem Ende des Verbindungsteils (31) auf der rechten Seite und einem Ende des Verbindungsteils (32) auf der linken Seite als Drehachse drehbar ist.

5. Fluoreszenz-Röntgenstrahlen-Analysevorrichtung (1) nach einem der Ansprüche 1 bis 4, **dadurch gekennzeichnet, dass** eine Röntgenröhre (51) und ein Detektor (52) im Inneren des Vorrichtungshauptkörpers (50) installiert sind.

## Revendications

1. Dispositif d'analyse à rayons X fluorescents (1) comprenant :
un corps principal de dispositif (50) dans lequel un échantillon (S) doit être agencé ;
une partie de porte (20) qui est mobile entre une position ouverte pour ouvrir le corps principal de dispositif (50) et une position fermée pour fermer le corps principal de dispositif (50) ; et
un commutateur de verrouillage (70) présentant une partie d'insertion d'actionneur (71) qui est prévue dans le corps principal de dispositif (50) et un actionneur (72) qui est prévu dans la partie de porte (20), dans lequel :
il devient impossible pour la partie de porte (20) de se déplacer vers la position ouverte tandis que l'actionneur (72) est inséré dans la partie d'insertion d'actionneur (71), **caractérisé en ce que**
l'actionneur (72) est configuré pour se déplacer entre une position en saillie dans laquelle l'actionneur (72) fait saillie à partir de la partie de porte (20) et une position logée dans laquelle l'actionneur (72) est logé dans la partie de porte (20), et
l'actionneur (72) est configuré pour se déplacer automatiquement vers la position en saillie lorsque la partie de porte (20) est déplacée vers la position fermée, tandis que l'actionneur (72) est configuré pour se déplacer automatiquement vers la position logée lorsque la partie de porte (20) est déplacée vers la position ouverte.

2. Appareil d'analyse à rayons X fluorescents (1) selon la revendication 1, **caractérisé en ce que**
le dispositif d'analyse à rayons X fluorescents (1) comprend en outre un câble métallique (92),
une extrémité de l'actionneur (72) est fixée à une extrémité du câble métallique (92), et
un mécanisme de liaison (55, 55b) qui coulisse lorsque la partie de porte (20) se déplace est fixé à l'autre extrémité du câble métallique (92).

3. Dispositif d'analyse à rayons X fluorescent (1) selon la revendication 1 ou 2, **caractérisé en ce qu'**un ressort comprimé (72b) qui applique une force de telle sorte que l'actionneur (72) se déplace vers la position en saillie est fixé sur l'actionneur (72).

4. Dispositif d'analyse à rayons X fluorescents (1) selon l'une quelconque des revendications 1 à 3, **caractérisé en ce que**
la partie de porte (20) comprend une surface supérieure, une paroi latérale droite, une paroi latérale avant, une paroi latérale gauche et une paroi latérale arrière,
la partie de porte (20) présente une partie de liaison de côté droit (31) qui est fixée à la paroi latérale droite et une partie de liaison de côté gauche (32) qui est fixée à la paroi latérale gauche, et
la partie de porte (20) peut tourner entre une position ouverte et une position fermée, une extrémité de la partie de liaison de côté droit (31) et une extrémité de la partie de liaison de côté gauche (32) servant d'axe de rotation.

5. Dispositif d'analyse à rayons X fluorescents (1) selon l'une quelconque des revendications 1 à 4, **caractérisé en ce qu'**un tube à rayons X (51) et un détecteur (52) sont installés à l'intérieur du corps principal de dispositif (50).
